# EUROPÄISCHE PATENTSCHRIFT

(11) **EP 1 155 638 B1**
(45) Veröffentlichungstag und Bekanntmachung des Hinweises auf die Patenterteilung: **30.06.2004**
(21) Anmeldenummer: 01109221.0
(22) Anmeldetag: 14.04.2001
(51) Int. Cl.: A47B 57/42, F16B 7/04

(54) **Lösbare Verbindung eines Auslegers mit einer Stütze**
Releasable connection of a cantilever with a support
Assemblage détachable d'une console en porte à faux avec un support

(30) Priorität: 17.05.2000 CH 9802000
(43) Veröffentlichungstag der Anmeldung: 21.11.2001
(73) Patentinhaber: ZURECON AG, CH-8003 Zürich (CH)
(72) Erfinder: Egli, Arturo J., 5300 Turgi (CH)
(74) Vertreter: Kägi, Otto

(56) Entgegenhaltungen:
- EP-A- 0 292 415
- EP-A- 0 983 736
- GB-A- 2 125 511
- GB-A- 2 231 379
- GB-A- 2 275 601

## Beschreibung

Die Erfindung betrifft eine lösbare Verbindung eines Auslegers mit einer Stütze, wobei der Ausleger eine ebene, gelochte Flanschplatte aufweist und die Stütze durch ein mit Löchern versehenes Profil gebildet ist. Solche an sich bekannten Teile - Stützen und Ausleger - werden beispielsweise in der Installationstechnik zum Verlegen von Kabelbahnen verwendet, aber auch zum Errichten von Warenregalen, (Bücher-)Gestellen usw. Die lösbare Befestigung der Ausleger ermöglicht deren Montage in wählbarer Höhe sowie üblicherweise, je nach Stützenprofil (z.B. Vierkant-Hohlprofil oder sogenanntes C-Profil), nach verschiedenen Richtungen hin ausgehend von der Stütze.

Die lösbare Montage der Ausleger erfolgt bisher normalerweise durch Verschrauben. Eine ebene (also nicht mit vorstehenden Haken versehene) Flanschplatte bietet den Vorteil, dass der Ausleger alternativ z.B. an einer Wand oder einem Betonpfeiler mittels Schraube und Dübel befestigt werden kann. Zur Montage an Stützen werden meist spezielle, relativ kostspielige Schraubengarnituren benötigt. Vor allem erfordert die Schraubbefestigung umständliche Manipulationen und entsprechenden Zeitaufwand. Dadurch wird die Montage erheblich verteuert.

Es sind Vorschläge bekannt, z.B. aus GB-A-2 231 379, bei denen zur Vermeidung einer Schraubenmontage separate Hakenteile von aussen durch eine Öffnung im Stützenprofil hindurchzustecken sind, anschließend gegenemander verschwenkt werden und dann durch eine zusätzliche Sicherungshülse in zusammengeschwenkter position gehalten werden.

Mit der vorliegenden Erfindung soll eine lösbare, schraubenlose Verbindung zwischen Ausleger und Stütze vorgeschlagen werden, die sich durch eine schnellere, einfachere Montage wie auch durch günstige Krafteinleitung für eine hohe Belastbarkeit auszeichnet.

Diese Aufgabe wird erfindungsgemäss gelöst durch ein Paar von zweischenkligen, spiegelbildlich abgewinkelten Haken, deren einer Schenkel in der Höhe den Löchern des Profils angepasst ist und deren anderer Schenkel einen nach oben abstehenden Nocken aufweist; die erstgenannten Schenkel sind dabei zum Durchstecken durch ein Loch, und die Haken sind zum anschliessenden, gegenläufigen Schwenken bestimmt, wobei nach dem Schwenken die zweitgenannten Schenkel aneinander anliegen und die Flanschplatte des Auslegers mit dem Langloch hinter die Nocken einhängbar ist und die erstgenannten Schenkel das Stützenprofil hintergreifen.

Ein wesentlicher Vorteil der erfindungsgemässen Verbindung besteht in der hohen Belastbarkeit, indem der Lochrand am Stützenprofil lediglich auf Druck (vertikal, in Längsrichtung der Stütze), aber nicht auf Biegung beansprucht wird. Die Krafteinleitung von den Haken in das Stützenprofil erfolgt durch Flächenauflage bzw. in einigem Abstand vom Lochrand. Die Hakenteile sind einfach zu handhaben, es werden keinerlei Werkzeuge benötigt. Herkömmliche, bereits vorhandene Ausleger und Stützen können ohne Änderung verwendet werden.

Besondere und vorteilhafte Varianten der im Patentanspruch 1 definierten Erfindung sind in den abhängigen Ansprüchen angegeben. Nachstehend wird die Erfindung anhand von Ausführungsbeispielen im Zusammenhang mit der Zeichnung näher erläutert.
- Fig. 1: zeigt perspektivisch eine Gesamtanordnung mit Stütze, Hakenpaar und Ausleger vor der Montage, wobei das Hakenpaar mit zwei verschiedenen gegenseitigen Positionen A und B der Haken dargestellt ist;
- Fig. 2 und 3: zeigen das Hakenpaar in der Position A bzw. B nach Fig. 1 in einem grösseren Massstab;
- Fig. 4: ist die Teilansicht eines montierten Auslegers von vorn;
- Fig. 5: ist ein Vertikalschnitt entlang der Linie V-V in Fig. 4;
- Fig. 6: ist ein Horizontalschnitt entlang der Linie VI-VI in Fig. 4;
- Fig. 7: zeigt ein in geeigneter Weise vormontiertes Hakenpaar, wobei ein werwendetes Halteteil unten noch separat dargestellt ist, und
- Fig. 8: zeigt eine andere Möglichkeit, das Hakenpaar vormontiert zusammenzuhalten.

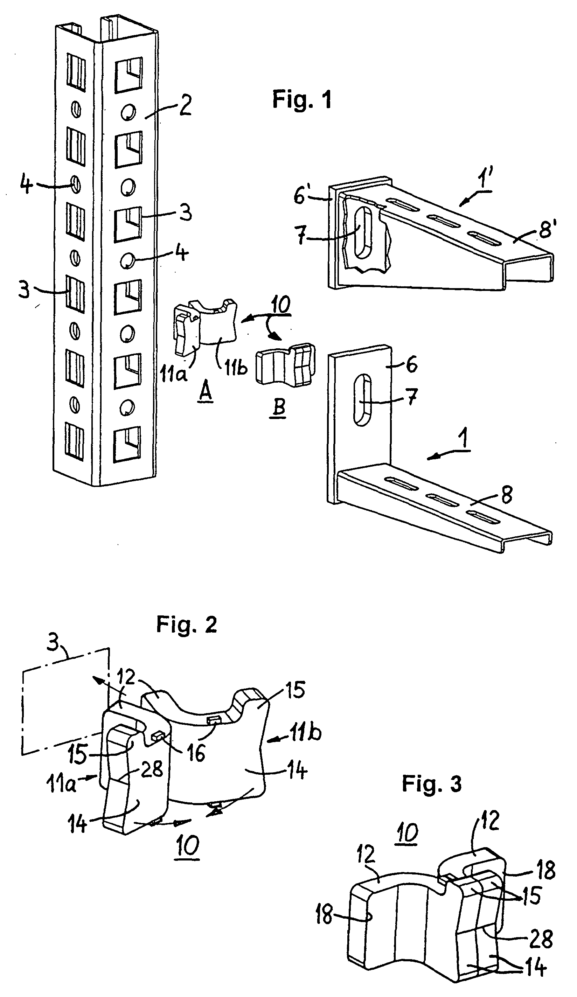

Gemäss Fig. 1 ist ein Ausleger 1 oder 1' an einer Stütze 2 lösbar und ohne Verwendung von Schrauben zu montieren. Die Stütze 2 ist hierfür mit viereckigen (quadratischen) Löchern 3 versehen; ausserdem können für andere Zwecke runde Löcher 4 vorhanden sein. Dargestellt ist ein an sich bekanntes, nach einer Seite offenes sogenanntes C-Profil, es kommt aber auch ein allseitig geschlossenes Vierkant-Hohlprofil in Frage. Es kann sich um eine Deckenstütze handeln, die oben einen (nicht dargestellten) Flansch zur Befestigung an der Decke aufweist, oder eine anderweitig z.B. an einer Wand montierte Profilschiene. Zur Verbindung mit der Stütze 2 eignen sich verschiedene Ausleger 1, 1' usw.. Vorausgesetzt wird jedoch eine ebene, mit einem Langloch 7 versehene Flanschplatte 6 bzw. 6', von welcher der Träger 8 bzw. 8' ausgeht. Solche an sich bekannten Ausleger sind bisher mit der Stütze 2 verschraubt worden; sie können auch direkt an einer Wand, einem Betonpfeiler usw. mittels Schraube und Dübel montiert werden.

Die schraubenlose Montage eines Auslegers 1, 1' auf der Höhe eines Lochs 3 erfolgt erfindungsgemäss mittels eines Paars von spiegelbildlich geformten Haken 11a und 11b. In Fig. 1 ist dasselbe Hakenpaar 10 zweimal dargestellt, nämlich in zwei verschiedenen gegenseitigen Positionen A und B der Haken. Die Gestalt der Haken 11a, 11b und der Montagevorgang werden anhand der weiteren Figuren 2 bis 6 erläutert.

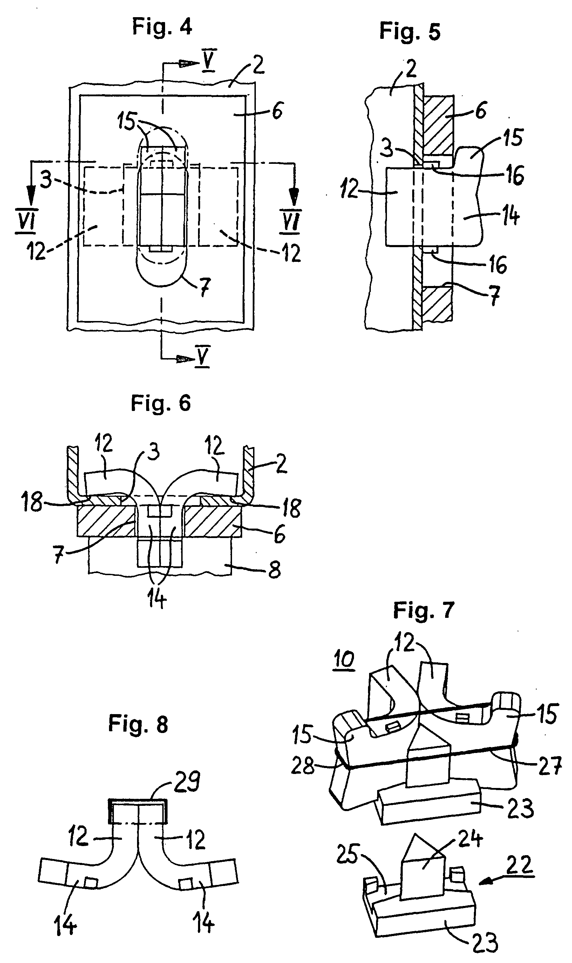

Die Haken 11a, 11b sind z.B. aus Flachstahl gefertigt und winkelförmig, jedoch spiegelsymmetrisch gebogen. Der eine Schenkel 12 jedes Hakens ist der Höhe der Löcher 3 angepasst bzw. durch diese durchsteckbar. Der andere Schenkel 14 der Haken 11a, 11b weist einen nach oben ragenden Nocken 15 auf. Die Vorderkante der Schenkel 14 ist vorzugsweise etwa auf halber Höhe bei 28 etwas eingekerbt. An den Schenkeln 14 sind ferner oben und unten in der Nähe der Biegestelle Anschläge 16 vorhanden. Die Gesamthöhe über den Anschlägen 16 ist grösser als die Höhe der Löcher 3, so dass beim Durchstecken der Schenkel 12 die Anschläge 16 an der Aussenseite der Stütze 2 zur Anlage kommen (s. Fig. 5).

Zur Montage eines Auslegers werden die Schenkel 12 eines Hakenpaares 10 in einer Lage A nach Fig. 2 durch ein gewähltes Loch 3 durchgesteckt (entweder wie in Fig. 2 angedeutet paarweise oder auch jeder Haken einzeln). Anschliessend werden die Haken 11a, 11b gegenläufig geschwenkt, bis die Schenkel 14 gemäss Fig. 3 in der Lage B aneinander anliegen und die Schenkel 12 das Stützenprofil (zu beiden Seiten des Loches 3) hintergreifen. Die Anschläge 16 verhindern dabei ein "Durchfallen" der Haken und halten die Nocken 15 im geeigneten Abstand zum Stützenprofil. Die Flanschplatte 6 des Auslegers wird nun mit ihrem Langloch 7 hinter die Nocken 15 eingehängt.

Die fertig montierte Verbindung geht aus den Fig. 4 bis 6 hervor. In Fig. 4 ist strichpunktiert die Lage des Langloches 7 angedeutet, bei welcher die Flanschplatte 6 über die Schenkel 14 und Nocken 15 geschoben wird. Die Materialdicke der Haken bzw. der Schenkel 14 wird zweckmässig so gewählt, dass die Breite des Langloches 7 im wesentlichen ausgefüllt wird. Ferner ist es von Vorteil, wenn, wie aus Fig. 6 ersichtlich, die Länge der Schenkel 12 zusammen etwa der Innenbreite des Stützenprofils entspricht; dadurch ist die Flanschplatte 6 bzw. der Ausleger an der Stütze 2 seitlich zentriert. Ein leichter Anzug auf der der Stütze 2 zugekehrten Seite der Nocken 15 (Fig. 5) bewirkt ein "Verspannen" der belasteten Verbindung, so dass die Flanschplatte 6 aussen am Stützenprofil und die Schenkel 12 auf dessen Innenseite satt anliegen. Besonders zweckmässig ist es, wenn, wie in Fig. 6 dargestellt, der Winkel zwischen den Schenkeln 12 und 14 jedes Hakens etwas kleiner als 90° ist; die Auflage der Schenkel erfolgt dann linienförmig an ihren Endkanten 18, d.h. in einigem Abstand von den Rändern des Loches 3 bzw. in der Nähe der Längskanten des Stützenprofils. Die Verbindung ist deshalb ausserordentlich hoch belastbar, bevor es zur Verformung des Stützenprofils oder gar zum Ausreissen der Lochränder kommt.

Das Manipulieren der Haken 11a, 11b zum Herstellen der Verbindung ist sehr einfach und es wird keinerlei Werkzeug benötigt. Ebenso leicht kann die Verbindung wieder gelöst werden.

Zur weiteren Erleichterung der Montage kann ein Hakenpaar 10 als "Paket" vormontiert werden, in einer Lage der Haken (A nach Fig 1 bzw. Fig. 2), in welcher die zwei Schenkel 12 miteinander in das Loch 3 eingeführt werden können. Zur vorbereitenden, vorübergehenden Halterung der Haken kann z.B. nach Fig. 7 ein von unten steckbares Halteteil 22, vorzugsweise aus Kunststoff, verwendet werden. Dieses weist einen kantigen Zapfen 24 auf, der von einer rechteckigen Platte 23 absteht. Eine Nut 25 in der Platte 23 nimmt die beiden Haken in der gewünschten Position auf. Die Haken können selbsthemmend in der Nut 25 festsitzen, oder es kann z.B. gemäss Fig. 7 eine elastische Schlinge 27 (Gummiband) um die Nocken 15 gelegt werden, welche die Haken am Halteteil 22 verspannt. Wird nach dem Einsetzen des "Paketes" an der Stütze das Halteteil 22 nach unten abgezogen, so besorgt die Schlinge 27 selbsttätig die gegenläufige Schwenkung der Haken. Das Halteteil 22 kann ggf. nach erfolgtem Einhängen der Flanschplatte 6 als Sicherung verwendet werden. Zu diesem Zweck wird der Zapfen 24 satt in ein rundes Loch 4 eingepresst, wobei die Platte 23 als Anschlag für die Flanschplatte 6 gegen unbeabsichtigtes Aushängen dient. Eine ähnliche Sicherung wäre auch durch Einstecken eines entsprechenden Sicherungsteils (nicht dargestellt) im unteren, offenen Bereich des Langloches 7 bei eingehängter Kopfplatte (in Fig. 4 und 5 ersichtlich) denkbar.

Eine weitere, einfachere Form der Vormontage ist in Fig. 8 dargestellt. Dabei werden die Schenkel 12 aneinander anliegend durch einen über ihre Enden gesteckten Clip 29 z.B. aus Metall oder Kunststoff provisorisch zusammengehalten; auch eine Fixierung mittels Klebband ist denkbar. Nach dem Durchstecken der Schenkel 12 durch das Loch 3 wird die provisorische Fixierung beim Zusammenführen der Schenkel 14 weggesprengt bzw. getrennt.

## Patentansprüche

1. Lösbare Verbindung eines Auslegers (1) mit einer Stütze (2), wobei der Ausleger (1) eine ebene, gelochte Flanschplatte (6) aufweist und die Stütze (2) durch ein mit Löchern (3) versehenes Profil gebildet ist,
**gekennzeichnet durch** ein Paar (10) von zweischenkligen, spiegelbildlich abgewinkelten Haken (11a, 11b), deren einer Schenkel (12) in der Höhe den Löchern (3) des Profils angepasst ist und deren anderer Schenkel (14) einen nach oben abstehenden Nocken (15) aufweist,
wobei die erstgenannten Schenkel (12) zum Durchstecken **durch** ein Loch (3), und die Haken (11a, 11b) zum anschliessenden, gegenläufigen Schwenken bestimmt sind,
und wobei nach dem Schwenken die zweitgenannten Schenkel (14) aneinander anliegen und die Flanschplatte (6) des Auslegers mit ihrem Loch (7) hinter die Nocken (15) einhängbar ist und die erstgenannten Schenkel (12) das Stützenprofil hintergreifen.

2. Lösbare Verbindung nach Anspruch 1, **dadurch gekennzeichnet, dass** die zweitgenannten Schenkel (14) obere und untere Anschläge (16) zur Anlage an der Aussenseite der Stütze (2) aufweisen.

3. Lösbare Verbindung nach Anspruch 1, **dadurch gekennzeichnet, dass** die Materialdicke der zweitgenannten Schenkel (14) zusammen im wesentlichen der Breite eines Langloches (7) in der Flanschplatte (6) entspricht.

4. Lösbare Verbindung nach Anspruch 1, **dadurch gekennzeichnet, dass** die Länge der beiden erstgenannten Schenkel (12) zusammen auf die Innenbreite des Stützenprofils abgestimmt ist, so dass das Hakenpaar (10) mit dem Ausleger (1) an der Stütze (2) seitlich zentriert ist.

5. Lösbare Verbindung nach Anspruch 1, **dadurch gekennzeichnet, dass** die Schenkel (12, 14) der Haken (11a, 11b) einen Winkel von weniger als 90° einschliessen.

6. Lösbare Verbindung nach Anspruch 1, **gekennzeichnet durch** Haltemittel (22, 29) zur vorbereitenden Halterung beider Haken (11a, 11b) des Paares (10) in einer gegenseitigen Position (A), die das gleichzeitige Durchstecken beider erstgenannten Schenkel (12) **durch** ein Loch (3) gestattet.

7. Lösbare Verbindung nach Anspruch 6, **dadurch gekennzeichnet, dass** die durchzusteckenden erstgenannten Schenkel (12) mittels Klebeband oder eines Clips (29) zusammengehalten werden.

8. Lösbare Verbindung nach Anspruch 6, **dadurch gekennzeichnet, dass** die Haken (11a, 11b) des Paares (10) durch ein von unten steckbares Halteteil (22) in Durchsteckposition gehalten werden.

9. Lösbare Verbindung nach Anspruch 8, **dadurch gekennzeichnet, dass** das Halteteil (22) zur Verwendung als Sicherung gegen das Aushängen der montierten Flanschplatte (6) ausgebildet ist.

10. Lösbare Verbindung nach Anspruch 1 oder 8, **gekennzeichnet durch** ein an beiden Haken (11a, 11b) eines Hakenpaars (10) angreifendes, elastisches Organ (27), welches die Haken zum gegenläufigen Schwenken vorspannt.

## Claims

1. Disconnectable connection of a bracket (1) with a support (2), whereby the bracket (1) incorporates a flat, perforated flange plate (6), and whereby the support (2) is formed by a profile equipped with holes (3), **characterised by** a pair (10) of two-legged, mirror-image, angled hooks (11a, 11b) whose one leg (12) is affixed at the height of the holes (3) of the profile, and whose other leg (14) incorporates an upwardly projecting cam (15), whereby the legs (12) that were mentioned first are suitable for engaging through a hole (3), and the hooks (11a, 11b) are suitable for a subsequent swivel movement in the opposite direction, and whereby the legs (14) that were mentioned second lie adjacent to one another following the swivel movement, and whereby the flange plate (6) of the bracket engages a hole (7) behind the cam (15), and whereby the firstly named leg (12) is engaged behind the support profile.

2. Disconnectable connection according to Claim 1, **characterised in that** the secondly named legs (14) incorporate upper and lower shoulders (16) which abut against the external surface of the support (2).

3. Disconnectable connection according to Claim 1, **characterised in that** the thickness of the material of the secondly named legs (14) together essentially equal the width of a long hole (7) within the flange plate (6).

4. Disconnectable connection according to Claim 1, **characterised in that** the lengths of the two firstly named legs (12) together are matched to the internal width of the support profile, so that the pair of hooks (10) is centred together with the bracket (1) on the side of the support (2).

5. Disconnectable connection according to Claim 1, **characterised in that** the legs (12, 14) of the hooks (11a, 11b) enclose an angle of less than 90°.

6. Disconnectable connection according to Claim 1, **characterised by** a fitting (22, 29) for the preparatory fitment of both hooks (11a, 11b) of the pair (10) in an opposing position (A) which enables the simultaneous engaging of both of the firstly named legs (12) through a hole (3).

7. Disconnectable connection according to Claim 6, **characterised in that** the engageable firstly named legs (12) are held together with the aid of adhesive tape or a clip (29).

8. Disconnectable connection according to Claim 6, **characterised in that** the hooks (11a, 11b) of the pair (10) are held in their engagement position with the aid of a fitting which can be inserted from below.

9. Disconnectable connection according to Claim 8, **characterised in that** the fitting (22) serves to secure against the disconnection of an assembled flange plate (6).

10. Disconnectable connection according to Claim 1 or 8, **characterised by** an elastic organ (27) which is engaged through both hooks (11a, 11b) of a pair of hooks (10), and which pretensions the said hooks against a movement in the opposite direction.

## Revendications

1. Liaison détachable d'un bras en console (1) comportant un appui (2), dans laquelle le bras en console (1) possède une plaque formant bride (6) plane perforée et l'appui (2) est formé par un profilé pourvu de trous (3), **caractérisée par** une paire (10) de crochets (11a, 11b) à deux branches, coudées symétriquement et dont une branche (12) est d'une hauteur adaptée à celle des trous (3) du profilé et dont l'autre branche (14) comporte une came (15) qui fait saillie vers le haut,
dans laquelle les branches mentionnées en premier lieu (12) sont destinées à traverser un trou (3), et les crochets (11a, 11b) sont prévus pour le pivotement intérieur en sens inverse, et
dans laquelle après le pivotement, les branches (14) indiquées en second lieu s'appliquent l'une contre l'autre et la plaque formant bride (6) du bras en console peut être accrochée au moyen de son trou (7) derrière la came (15), les branches (12) indiquées en premier lieu s'engageant derrière le profilé de support.

2. Liaison détachable selon la revendication 1, **caractérisée en ce que** les branches (14) indiquées en second lieu possèdent des butées supérieure et inférieure (16) destinées à s'appliquer contre le côté extérieur du support (2).

3. Liaison détachable selon la revendication 1, **caractérisée en ce que** l'épaisseur du matériau des branches (14) indiquées en second lieu, prises conjointement, correspond essentiellement à la largeur d'un trou allongé (7) formé dans la plaque formant bride (6).

4. Liaison détachable selon la revendication 1, **caractérisée en ce que** la longueur des deux branches (12) indiquées en premier lieu, prises conjointement, est adaptée à la largeur intérieure du profilé de support de sorte que la paire de crochets (10) est centrée latéralement avec le bras en console (1) sur le support (2).

5. Liaison détachable selon la revendication 1, **caractérisée en ce que** les branches (12, 14) des crochets (11a, 11b) font un angle inférieur à 90°.

6. Liaison détachable selon la revendication 1, **caractérisée par** des moyens de retenue (22, 29) servant à retenir, de façon préparatoire, les deux crochets (11a, 11b) de la paire (10) dans des positions réciproques (A) permettant l'enfichage simultanément des deux branches (12) indiquées en premier lieu dans un trou (3).

7. Liaison détachable selon la revendication 6, **caractérisée en ce que** les branches (12) indiquées en premier lieu, qui doivent être enfichées, sont maintenues assemblées au moyen d'une bande adhésive ou d'une pince (29).

8. Liaison détachable selon la revendication 6, **caractérisée en ce que** les crochets (11a, 11b) de la paire (10) sont retenus par une partie de retenue (22) pouvant être enfichée à partir du bas, dans la position d'enfichage.

9. Liaison détachable selon la revendication 8, **caractérisée en ce que** la partie de retenue (22) est agencée pour être utilisée comme dispositif de sécurité contre un décrochement de la plaque formant bride installée (6).

10. Liaison détachable selon la revendication 1 ou 8, **caractérisée par** un organe élastique (27) qui met en prise les deux crochets (11a, 11b) d'une paire de crochets (10) et qui précontraint les crochets pour qu'ils pivotent en des sens opposés.
